# EUROPÄISCHE PATENTSCHRIFT

(11) **EP 2 414 662 B1**
(45) Veröffentlichungstag und Bekanntmachung des Hinweises auf die Patenterteilung: **29.10.2014**
(21) Anmeldenummer: 10708749.6
(22) Anmeldetag: 25.02.2010
(51) Int. Cl.: F02M 51/06, F02M 61/16

(54) **HYDRAULISCHER HUBÜBERTRAGER BZW. HUBÜBERSETZER**
HYDRAULIC STROKE TRANSMITTER OR AMPLIFIER
DISPOSITIF HYDRAULIQUE DE TRANSMISSION OU AMPLIFICATION DE COURSE

(30) Priorität: 31.03.2009 DE 102009015738
(43) Veröffentlichungstag der Anmeldung: 08.02.2012
(73) Patentinhaber: Siemens Aktiengesellschaft, 80333 München (DE)
(72) Erfinder: BACHMAIER, Georg, 80469 München (DE); EBELSBERGER, Gerit, 81737 München (DE); FISCHER, Bernhard, 84513 Töging A. Inn (DE); GERLICH, Matthias, 80636 München (DE); HÖGE, Michael, 85622 Feldkirchen (DE); ZÖLS, Wolfgang, 81249 München-Lochhausen (DE)
(86) Internationale Anmeldenummer: PCT/EP2010/052363
(87) Internationale Veröffentlichungsnummer: WO 2010/112275

(56) Entgegenhaltungen:
- EP-A1- 1 519 036
- EP-A2- 1 111 230
- WO-A1-2005/026528
- DE-A1- 10 260 349
- DE-A1- 19 646 847
- DE-A1- 19 958 704
- DE-A1-102004 015 622
- DE-A1-102004 022 620
- DE-A1-102007 053 423

## Beschreibung

Die Erfindung betrifft einen hydraulischen Hubübertrager, der einen von einem Festkörperaktor vorgegebenen Hub weiterleitet. Meist ist damit eine Übersetzung verbunden, um den von Haus aus geringen Hub von Festkörperaktoren zu vergrößern.

Zur Einbringung einer gewünschten Kraftstoffmenge in beliebige Verbrennungsprozesse sind in der Regel Injektoren notwendig, mittels der eine Kraftstoffmenge dosierbar ist. Da sehr viele Verbrennungsprozesse mit der Direkteinspritzung von unter Hochdruck stehendem Brennstoff ablaufen, werden häufig besonders schnell arbeitende Aktoren eingesetzt, welche Injektoren antreiben. Dies bedeutet, dass ein Aktor einen Hub erzeugt, welcher beispielsweise eine Injektornadel betätigt, die ihrerseits ein Ventil öffnet und einen Brennstoff in vorbestimmten Zeitintervallen und in einstellbaren Durchflussmengen für einen Verbrennungsprozess freigibt. Verbrennungsluft wird in diesem Fall separat zugeführt.

Injektoren für Hochdruck-Direkteinspritzung benutzen dabei häufig schnelle Aktoren, wie beispielsweise Piezo Multilayer Aktoren (PMA). Dies sind Festkörperaktoren, deren zentrales Element aus einer Vielzahl von piezoelektrischen Schichten besteht. Weiterhin sind so genannte magnetostriktive Festkörperaktoren bekannt, die einen magnetisch mechanischen Effekt für die Erzeugung eines Hubes ausnutzen. Für die Erzeugung eins Hubes ist wichtig, dass derartige Festkörperaktoren einen zu geringen Hub aufweisen, um eine Injektornadel soweit zu öffnen, dass die gewünschte Brennstoffmenge eingebracht wird. Besonders bei Gasinjektoren, die einen größeren Hub erfordern als Injektoren, die flüssigen Brennstoff dosieren, wird dies zu einem wesentlichen Problem. Dies führt dazu, dass lediglich Konstruktionen mit einem Hubübersetzer in Frage kommen.

Im Fall des Einsatzes von Wasserstoff als Brennstoff kommt erschwerend hinzu, dass das kleine und leichte Wasserstoffmolekül leicht durch nichtmetallische Elemente wie Gummimembranen diffundiert. Somit wird die Auswahl eines geeigneten Übersetzers zu einem zentralen Problem beim Injektorbau. Dies resultiert auch aus der Tatsache, dass ein Übersetzer viele Eigenschaften eines Injektors bestimmt und im Gegensatz zu einem Aktor konstruktiv umgestaltet werden kann.

In bisherigen Problemlösungen erfolgt eine Hubvergrößerung durch mechanische Übersetzung oder durch teilweise nichtmetallisch gedichtete hydraulische Übersetzung. Mechanische Übersetzer, die beispielsweise einen mechanischen Hebel verwenden, sind allgemein anfällig für Verschleiß und für unerwünschte Schwingungen. Dies gilt insbesondere dann, wenn ein Leerhub zwischen Aktor und Übersetzer erforderlich ist, beispielsweise, um eine Leckage zu verhindern, die bei thermischer Längenänderung aufgrund von Erwärmung auftreten könnte. Infolgedessen wird ein Aufschlag des Aktors, beispielsweise auf eine Düsennadel stattfinden, wodurch der Injektor ungünstig beeinflusst wird. Ungleichmäßiges Einspritzen und unsichere Öffnungs- und Schließcharakteristika sind die Folge. Ein Leerhub zwischen Aktor und Übersetzer ist auch deshalb unerwünscht, weil die Aktorauslenkung bis zum Kontakt mit der Düsennadel ungenutzt bleibt.

Eine Vergrößerung des Hubes eines Aktors mit einer Übersetzung von weniger als 1:2 wird oft mit mechanischen Hebeln realisiert. Bei Injektoren für Dieselmotoren kann beispielsweise das mechanische Übersetzungsverhältnis 1:1,6 betragen. Gasinjektoren benötigen typischerweise größere Übersetzungen. Bei Gasinjektoren werden meist hydraulische Übersetzer, auch bezeichnet als hydraulische Hebel, eingesetzt. Bei der Direkteinspritzung von CNG (komprimiertes Erdgas) wird beispielsweise eine Hubübersetzung von 1:6 verwendet.

Durch Einsatz eines hydraulischen Übersetzers kann der Leerhub vermieden werden, so dass ständig die Wirkungskette zwischen Aktor und Düsennadel vorhanden ist. Dies schlägt sich direkt im konstruktiven Aufbau nieder. Anders betrachtet wird die Aktorauslenkung zu einem größeren Teil vom Injektor ausgenutzt und umgesetzt.

Ein Nachteil im Stand der Technik ist beispielsweise in der Kraftfahrzeugtechnik der zu beachtende weite Temperaturbereich, der von - 40 C° bis + 150 C° reichen kann. Dies kann bei der Betrachtung von Flüssigkeitsvolumina erhebliche Volumenveränderungen mit sich bringen. Spitzenwerte können wesentlich über 30 % Volumenzunahme liegen. Aus diesem Grund benötigen hydraulische Hubübersetzer in den meisten Fällen eine Verbindung zu einem Reservoir.

In der deutschen Offenlegungsschrift DE 10 2005 042 786 A1 wird beispielsweise ein Kraftstoffinjektor offenbart, der mit hermetisch abgedichtetem Hydrauliksystem ausgestattet ist. In dieser Druckschrift werden so genannte geführte Kolben verwendet. Derartige geführte Kolben erfordern hohe mechanische Präzision in der Fertigung und sind sehr anfällig für Verschleiß.

Die WO 2005/026528 A1 beschreibt ein hydraulisch abgeschlossenes hydraulisches Kompensationselement, das mit einem Fluid befüllbar ist. Das Kompensationselement umfasst ein hohlzylinderförmiges Gehäuse mit einem Innenraum, welcher mindestens zwei unterschiedliche queraxiale Durchmesser aufweist, wobei eine Innenwand des Gehäuses mindestens eine axial druckwirksame Fläche aufweist. Das Kompensationselement umfasst außerdem eine in den Innenraum des Gehäuses führende, verschließbare Befüllbohrung, einen im Gehäuse axial verschieblich aufgenommenen Kolben mit mindestens einer axial druckwirksamen Fläche, welche der axial druckwirksamen Fläche des Gehäuses gegenüberliegt, und eine Außenkontur, die an die Innenwand des Gehäuses derart angepasst ist, dass teilweise Spielanpassungen mit fluiddrosselnder Wirkung zwischen dem Kolben und dem Gehäuse ausgebildet sind.

Die DE 10 2004 015 622 A1 beschreibt ein Brennstoffeinspritzventil mit einem Hubelement, das zwischen einem topfförmigen Zylinder und einem mit einem Kolben wirkverbundenen Kopfteil axial beweglich gelagert ist, wobei eine Abdichtung zwischen dem Zylinder und dem Hubelement und zwischen dem Hubelement und dem Kopfteil vorgesehen ist.

Der Erfindung liegt die Aufgabe zugrunde, einen hydraulischen Hubübersetzer zu beschreiben, der ein abgeschlossenes hydraulisches System aufweist, ein hydraulisches Lager bildet und Verschleiß arm ausgelegt ist. Die Lösung dieser Aufgabe geschieht durch die Merkmalskombination des Hauptanspruchs. Vorteilhafte Ausgestaltungen können den Unteransprüchen entnommen werden.

Bei einem erfindungsgemäßen hydraulischen Hubübertrager ergibt sich der Vorteil, dass verschleißanfällige Führungen von geführten Kolben, die sowohl in der Herstellung, als auch im Betrieb sehr aufwändig sind, umgangen werden. Der neue Aufbau eines hydraulischen Hubübertragers wirkt in den kurzen Zeiten während der Einspritzphase eines Injektors wie ein herkömmlicher hydraulischer Hubübertrager, nämlich als steifes Lager. Zusätzlich gleicht der neue hydraulische Hubübertrager Längenänderungen aus, die sich nach wie vor durch Temperaturänderungen einstellen. Dies begründet sich auf unterschiedlichen Ausdehnungskoeffizienten verschiedener Materialien.

Die Erfindung wirkt vorteilhaft in der Richtung, dass ein hydraulischer Hubübertrager als verschleißarme Konstruktion aufgebaut ist. Das trägt bei, dass keinerlei aufwändig herzustellende Kolben oder Kolbenführungen, die außerdem im Betrieb verschleißanfällig sind, eingebaut werden müssen.

Eine vorteilhafte Verbesserung der hermetischen Abdichtung eines hydraulischen Systems geschieht durch den Einsatz von Metallbälgen, die mehrere Hydraulikvolumen nach außen hin hermetisch dicht abgrenzen. Diese Hydraulikvolumen stehen untereinander gedrosselt oder ungedrosselt in Verbindung.

Wird zunächst die Eigenschaft einer hydraulischen Hubübertragers betrachtet, so sorgen so genannte hydraulische Lager für einen Spielausgleich, indem auftretender Leerhub ausgeglichen wird. Damit bleibt beispielsweise ein Aktor auf Anlage zu einer Düsennadel. Ein weiterer Vorteil wird durch eine metallische Abdichtung in Form der Metallbälge erzielt, die den wesentlichen Vorteil einer leckagefreien Abdichtung mit sich bringt. Beide Vorteile sind mit unterschiedlichen Zeitkonstanten des hydraulischen Systems verbunden.

In kurzen Zeiten, während denen beispielsweise ein Injektor einspritzt, funktioniert das hydraulische Lager, dahingehend, dass eine Abstützung, während der Injektor einspritzt, auf ein festes Lager wirkt. Hierzu ist im Hydrauliksystem eine Drossel vorgesehen ist. Über längere Zeiträume können sich aber unterschiedliche Ausdehnungen verschiedener Materialien ausgleichen, indem langsame Ausgleichsvorgänge in dem Hydrauliksystem über gedrosselte Pfade ablaufen.

Zur Vervollständigung der optimierten hermetischen Abdichtung des Hydrauliksystems sind die Metallbälge jeweils über Schweißnähte mit ihren benachbarten Bauelementen verbunden.

Es ist weiterhin mit besonderen Vorteilen verbunden, wenn größere Hydraulikvolumen, die sich nicht anders realisieren lassen, durch Verdränger verkleinert werden. Damit wird sichergestellt, dass ein verlustarmer Hubübertrager realisierbar ist. Dies begründet sich darauf, dass so genannte inkompressible Fluide einen endlichen Temperaturausdehnungskoeffizienten aufweisen. Dieser kann sich bei größeren Mengen an Flüssigkeit bei schwankender Temperatur beziehungsweise schwankendem Druck negativ auswirken.

Zur vorteilhaften Ausbildung des Hydrauliksystems ist die Positionierung der Metallbälge konzentrisch zur Festkörperaktorachse des Festkörperaktors angeordnet.

Das Hydrauliksystem weist lediglich einen bewegbaren Kolben auf, der nicht bei einer Hubübertragung oder Hubtransformation bewegt wird, sondern nur bei Temperaturänderungen, insbesondere im Hydraulikfluid in den Hydraulikvolumen. Dabei ist eine Möglichkeit der Druckvorgabe in dem Hydraulikfluid sehr vorteilhaft. Insbesondere ist eine mechanische Feder zur Druckeinstellung vorteilhaft.

Zur Reduzierung des Volumens eines Hydraulikfluids ist mindestens ein Verdränger in mindestens eines der Hydraulikvolumen (11, 12, 13) einsetzbar.

Die Vorteile gegenüber herkömmlichen hydraulischen Hebeln bestehen darin, dass eine vollständige metallische Dichtung vorliegt und eine verschleißarme Konstruktion realisierbar ist.

Weiterhin kann ein modularer Aufbau erzeugt werden. Der Einsatz von Metallbälgen erzielt den Vorteil, dass ein absolut dichter und reibungsarmer hydraulischer Hubübertrager, realisierbar ist.

Ein Hubübersetzer oder auch ein Hubuntersetzer lassen sich leicht durch die Auslegung der Druck wirksamen Flächen im Hydrauliksystem darstellen. Dies ergibt ein hydraulisches Lager mit Hubtransformation.

Im Folgenden werden anhand der begleitenden schematischen Figuren die Erfindung nicht einschränkende Ausführungsbeispiele beschrieben. Dabei werden gleiche Bauelemente mit gleichen Bezugszeichen benannt.
- Figur 1A: zeigt einen hydraulischen Hubübertrager mit Spielausgleich, der an eine Düsennadel angeschlossen ist, bei Temperatur T1,
- Figur 1B: zeigt eine Darstellung entsprechend Figur 1A, wobei der metallisch gedichtete hydraulische Hubübertrager mit Spielausgleich bei einer geringeren Betriebstemperatur T2,
- Figur1C: zeigt eine Einzelheit entsprechend Figur 1B, wobei der Ringspalt zwischen dem Hohlzylinder des beweglichen Kolbens und der zentralen Öffnung im Festlager verdeutlicht wird,
- Figur 2A: zeigt einen metallisch gedichteten hydraulischen Hubübertrager mit Spielausgleich in Verbindung mit einer Düsennadel, durch welche ein Ventil betätigt wird,
- Figur 2B: zeigt den geöffneten Zustand des Ventils entsprechend einer Darstellung nach Figur 2A,
- Figur 3: zeigt eine Ausführung, welche in einem großen Hydraulikvolumen Verdränger aufweist.

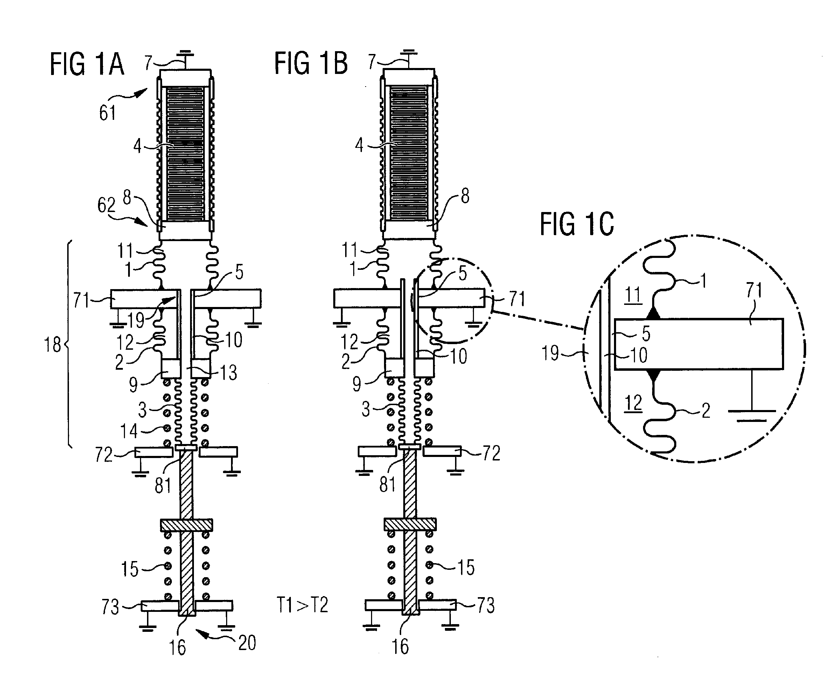

Die Figuren 1A und 1B zeigen prinzipiell den gleichen Aufbau, wobei in der Figur 1A die Betriebstemperatur T1 anliegt, welche größer ist als die Betriebstemperatur T2 entsprechend Figur 1B. Beide Figuren weisen im Wesentlichen gleiche mit gleichen Bezugszeichen benannte Bauelemente auf. Es ist ein Festkörperaktor 4 vorhanden, welcher ein piezoelektrischer Aktor oder ein magnetostriktiver Aktor sein kann. Der Aktor stützt sich rückwärtig mit seinem hinteren Ende 61 an einem Festlager 7 ab. Am vorderen Ende 62 des Festkörperaktors weist dieser eine Endplatte 8 auf, welche vorzugsweise über eine Schweißnaht mit dem ersten Metallbalg 1 verbunden ist. Dabei wird das erste Hydraulikvolumen 11 dargestellt.

Der erste Metallbalg 1 ist an seinem anderen Ende, in axialer Richtung des Festkörperaktors 4 betrachtet, mit einem Festlager 71 fest und hermetisch dicht verbunden, was vorzugsweise durch eine Schweißnaht geschieht.

Das Festlager 71 ist mit einer zentralen Öffnung 19 ausgestattet, in welche ein zu einem beweglichen Kolben 9 gehörender Hohlzylinder 10 axial hineinreicht und sich zumindest bis zum ersten Hydraulikraum 11 erstreckt. Das innere Volumen des Hohlzylinders 10 bildet einen Teil des dritten Hydraulikraums 13. Ein zweiter Hydraulikraum 12 wird dargestellt, indem ein zweiter Metallbalg 2 konzentrisch zum Hohlzylinder 10 positioniert wird, am Festlager 71 und am Kopf des beweglichen Kolbens 9 angeschweißt wird. Der Kolben 9 weist dazu einen Teil mit größerem Durchmesser als der Hohlzylinder 10 auf und umfasst eine zentrale Öffnung, deren Durchmesser etwa dem Innendurchmesser des Hohlzylinders entspricht.

Ein dritter Metallbalg 3 wird einerseits an den beweglichen Kolben und ist andererseits mit einer Endplatte 81 verschweißt. Damit ist das Hydrauliksystem 18 des beanspruchten Hubübertragers realisiert. Zur Darstellung eines Injektors ist an die Endplatte 81 jeweils das hintere Ende einer Düsennadel 16, die ein Ventil 20 öffnet und schließt, zu kontaktieren oder zu verbinden.

Mittels der Feder 14 wird, abgestützt vom Festlager 72, der bewegliche Kolben 9 unter Druck gesetzt, wobei dieser Druck über die Feder einstellbar ist. Damit lässt sich der im gesamten Hydrauliksystem 18 vorhandene Druck, der sich in den Hydraulikkammern 11, 12, 13 einheitlich einstellen kann, über die Feder 14 vorgeben. Die Feder 15 wirkt als Rückstellfeder für das Ventil 20.

In der Einzelheit, die in Figur 1B gekennzeichnet ist und die in Figur 1C vergrößert dargestellt ist, wird sichtbar, dass der erste Metallbalg 1 und der zweite Metallbalg 2 an gegenüberliegenden Seiten des Festlagers 71 durch eine Schweißnaht jeweils fest angebracht und hermetisch dicht angekoppelt sind. Dabei werden durch den ersten Metallbalg 1 ein erstes Hydraulikvolumen 11 und durch den zweiten Metallbalg 2 ein zweites Hydraulikvolumen 12 abgegrenzt. Weiterhin ist die Öffnung 19 im Festlager 71 an zentraler Position angedeutet, wobei der Hohlzylinder 10, der Teil des beweglichen Kolbens 9 ist, teilweise dargestellt ist. Zwischen Hohlzylinder 10 und dem Rand der Öffnung 19 des Festlagers 71 ist der Ringspalt 5 ausgebildet. Dieser Ringspalt 5 bildet die Drossel zwischen dem ersten und dem zweiten Hydraulikvolumen 11, 12.

Das dritte Hydraulikvolumen 13 wird radial begrenzt von dem insgesamt als Hohlkörper dargestellten, beweglichen Kolben 9, sowie dem dritten Metallbalg 3, welcher an seinem dem Festkörperaktor 4 abgewandten Ende mit einer Endplatte 81 abgeschlossen ist. Somit wird deutlich, dass das erste Hydraulikvolumen 11 mit dem zweiten Hydraulikvolumen 12 gedrosselt in Verbindung steht und mit dem dritten Hydraulikvolumen 13 ungedrosselt in Verbindung steht.

Zur Realisierung eines Injektors ist an der Endplatte 81 zusätzlich eine Düsennadel angebracht, die ein Ventil 20 steuert.

Über den Betrieb des Festkörperaktors 4 wird das in den Hydraulikvolumen 11, 12, 13 enthaltene Hydraulikfluid jeweils bei einem Hub komprimiert und sorgt über das Verhältnis der druckwirksamen Flächen im ersten Hydraulikvolumen 11 und im dritten Hydraulikvolumen 13 für eine entsprechende Hubübersetzung. Wesentlich ist dabei das Verhältnis der Ringflächen an der Unterseite des ersten Hydraulikvolumens 11 und an der Unterseite des dritten Hydraulikvolumens 13, das heißt, auf der Endplatte 81.

In Figur 1B ist sichtbar, dass durch die Temperatur T2, die kleiner ist als die Temperatur T1 nach Figur 1A, eine Zusammenziehung des Hydraulikfluides zu einer Verkürzung des zweiten Metallbalgs 2 geführt hat. Es ist kein Leerhub zwischen Aktor und Düsennadel aufgetreten. Dies bedeutet, dass ein Ausgleich dieses durch Temperaturschwankungen auftretenden mechanischen Spieles durch den hydraulischen Hubübertrager, insbesondere hydraulischen Übersetzer, ausgeglichen worden ist. Bei einem erneuten Hub des Festkörperaktors 4 wird der hydraulische Hubübertrager kurzzeitig ein festes hydraulisches Lager beziehungsweise einen festen hydraulischen Hebel vorfinden, da die Strömungsmenge von Hydraulikfluid im Ringspalt 5 gedrosselt und damit begrenzt ist.

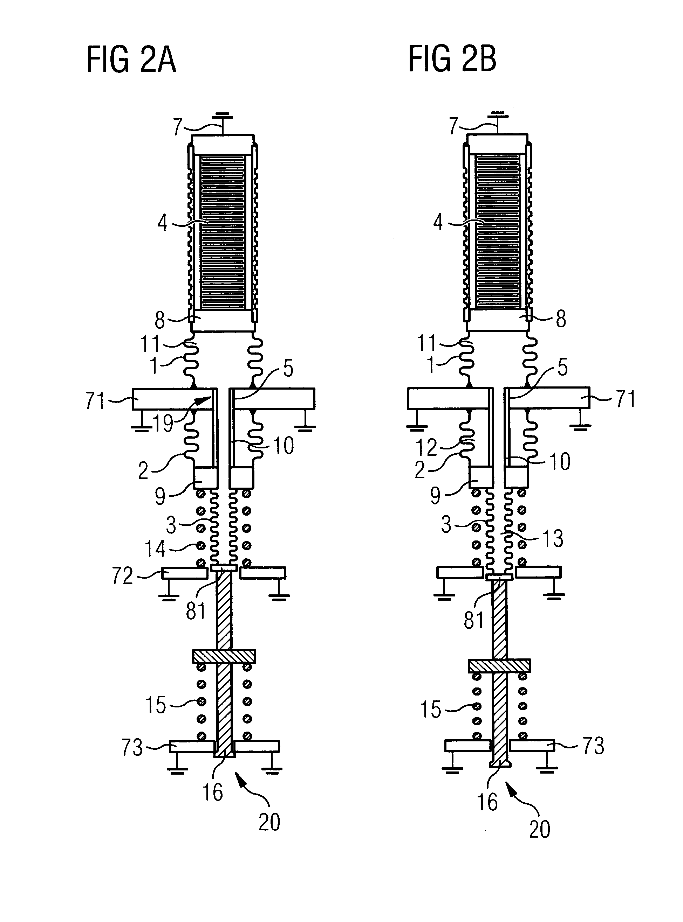

In der Figur 2A ist ein geschlossener Injektor dargestellt und in der Figur 2B ein offener Injektor mit geöffnetem Ventil 20. Der Aufbau des Hubübertragers in den Figuren 2A, 2B entspricht ohne Änderung dem der Figur 1A oder der Figur 1B. Unterschiede ergeben sich im Vergleich zwischen den Figuren 2A und 2B dadurch, dass der Festkörperaktor 4 in Figur 2B im elongierten Zustand dargestellt ist. Das heißt, dass seine Maße in Längsrichtung größer sind, als in Figur 2A. Damit wird die Hydraulikflüssigkeit im ersten Hydraulikvolumen 11 komprimiert und der erste Metallbalg 1 ist ebenfalls gestaucht. Der im ersten Hydraulikvolumen 11 erhöhte Druck setzt sich ungedrosselt fort in das dritte Hydraulikvolumen 13. Damit wird der dritte Metallbalg 3 augrund der Verhältnisse der Druck wirksamen Flächen, wie oben beschrieben, um einen bestimmten Betrag verlängert. Entsprechendes geschieht mit der Düsennadel 16, die entsprechend versetzt wird.

Um die Anfälligkeit des Hydrauliksystems 18 auf Temperaturschwankungen abzukoppeln, ist es vorteilhaft, große Hydraulikvolumen weitestgehend anzupassen. Dies bedeutet in der Regel eine Verkleinerung der Hydraulikvolumen, welche auf solche Bereiche gerichtet ist, die notwendige Hydraulikströme nicht behindern.

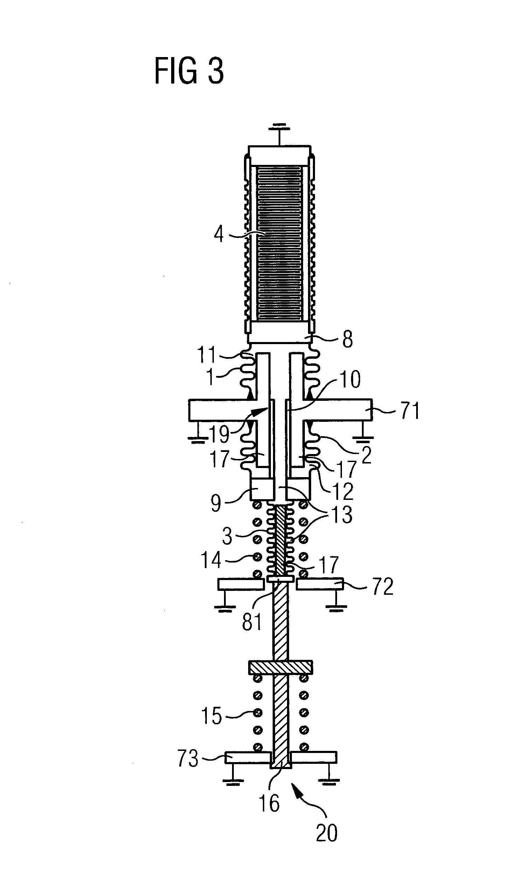

Figur 3 zeigt einen hydraulischen Hubübertager beziehungsweise einen hydraulischen Hubübersetzer entsprechend den Figuren 1A, 1B, 2A mit geschlossenem Ventil, wodurch ein Injektor realisiert ist. Dabei wird mindestens ein Verdränger 17 in einem oder in mehreren Hydraulikvolumen untergebracht beziehungsweise ausgebildet. In Figur 3 ist der Verdränger 17 zum einen quaderförmig oder ringförmig im ersten Hydraulikvolumen 11 ausgebildet, wobei der Verdränger 17 Teil des Festlagers 71 ist. In der Darstellung nach Figur 3 ist das Festlager 1 ebenso mit quaderförmigen oder ringförmigen Verdrängern 17 versehen, welche in Richtung Düsennadel in das zweite Hydraulikvolumen 12 hineinragen. Wesentlich ist dabei, dass bewegte Elemente wie beispielsweise der bewegliche Kolben 9 in ihrer Bewegung nicht behindert werden.

Ein weiterer Verdränger in Figur 3 ist in dem dritten Hydraulikvolumen 13 positioniert, wobei dieser mit der Endplatte 81 verbunden sein kann und somit die druckwirksame Fläche an der Endplatte 81 sich in Richtung Aktor verlagert.

Der neue Aufbau wirkt in den kurzen Zeiten, während derer der Injektor einspritzt, wie ein herkömmlicher hydraulischer Hebel. Zusätzlich gleicht der Aufbau Längenänderungen aus, die sich zum Beispiel durch Temperaturänderungen einstellen. Der Aufbau selbst ist eine geschlossene, separat zu fertigende und damit leckagefreie Einheit. Sie ist vollständig metallisch gedichtet und benötigt keine Führungen.

Die Erfindung kombiniert die Vorteile der Hubübersetzung, des Spielausgleichs für die Vermeidung von Leerhub, die Leckagefreiheit durch die Verwendung von metallischen Dichtungen und das Fehlen von verschleißanfälligen Führungen. Gegenüber Ausführungen mit mechanischen Hebeln taucht eine Menge von Vorteilen auf. Ein hydraulisches System hat den Vorteil, dass der Aktor auf Anlage an einer Düsennadel bleibt, so dass kein Leerhub auftritt. Damit werden nur geringe Schwingungen angeregt, kein Leerhub erzeugt und die Ausnutzung der Aktortätigkeit wird optimiert.

Der metallisch gedichtete, hydraulische Hubübertrager mit Spielausgleich besteht aus drei Metallbälgen 1, 2, 3. Diese sind mit einem hydraulischen Fluid befüllt. Weiterhin ist ein Festlager umfasst sowie eine Feder zwischen Festlager und Kolben, beziehungsweise einem beweglichen Kolben. Die im Verlauf als Festlager 7, 71, 72, 73 bezeichneten Festlager können beispielsweise sämtlich zu einem Gehäuse für einen hydraulischen Hubübertrager, hydraulischen Hubübersetzer oder einen Injektor gehören.

Der erste Metallbalg 1 ist an einer Endplatte 8 des Festkörperaktors 4 und an einem Festlager 71 angeschweißt. Die Endplatte 8 kann Teil des Aktors sein. Der zweite Metallbalg 2 ist am Festlager 71 und am beweglichen Kolben 9 angeschweißt. Der dritte Metallbalg 3 ist am beweglichen Kolben 9 und an einer Endplatte 81 angeschweißt. Die Endplatte 81 dichtet das dritte Hydraulikvolumen und dient der Kraftübertragung auf die Düsennadel 16.

Über eine Öffnung 19, vorzugsweise zentral positioniert, im Festlager 71 ist ein Fluidpfad für das Hydraulikfluid im ersten Hydraulikvolumen 11 im Metallbalg 1 gegeben zur Verbindung mit dem Hydraulikfluid im dritten Hydraulikvolumen im dritten Metallbalg 3.

Das erste Hydraulikvolumen 11 im ersten Metallbalg 1 steht ebenfalls mit dem zweiten Hydraulikvolumen 12 des zweiten Metallbalgs 2 in Verbindung, allerdings lediglich über den als Drossel wirkenden Ringspalt 5 am Festlager 71 zwischen dem ersten Metallbalg 1 und dem zweiten Metallbalg 2. Über diesen Ringspalt 5 können langsame Ausgleichsvorgänge ablaufen wodurch der beweglichen Kolben 9 versetzt wird. Auf Dauer stellt sich damit in allen drei Hydraulikvolumen 11, 12, 13 überall der gleiche Druck ein. Dieser wird von der Feder 14 zwischen Gehäuse und dem beweglichen Kolben 9 bestimmt. Dies ist auch dann der Fall, wenn sich das Volumen des Hydraulikfluids durch Temperaturänderung verändert. In Figur 1B ist dies für den Fall einer Abkühlung dargestellt. Der erste Metallbalg 3 expandiert, wobei jedoch der größere zweite Metallbalg 2 komprimiert. In Summe werden die zweiten und dritten Hydraulikvolumen 12, 13 gerade so viel kleiner, dass die thermischen Effekte kompensiert werden. Das erste Hydraulikvolumen 11 bleibt dabei konstant, wobei Effekte zweiter Ordnung, wie die Steifigkeit des Aktors vernachlässigbar sind. Es tritt keine Leckage auf, da das gesamte Hydrauliksystem 18 in Metallbälgen eingeschlossen ist. Der Druck im Hydraulikfluid, bleibt zumindest so lange konstant, wie die Feder 14 im Proportionalbereich arbeitet. Der thermische Längenausgleich ist ein Vorteil, es werden jedoch auch solche Längenänderungen ausgeglichen, die nicht thermisch bedingt sind. Hierzu zählen beispielsweise Alterungsprozesse im Festkörperaktor, welche dessen Polarisierung und damit seine Länge ändern können. Durch den Spielausgleich bleiben alle Elemente auf Kontakt.

Bei schnellen Vorgängen zeigt sich ein ganz anderes Verhalten des Systems. Während der kurzen Betätigungszeit des Aktors ist der Strömungswiderstand im Ringspalt 5 derart groß, dass praktisch gar kein Fluidaustausch zwischen den ersten und zweiten Hydraulikvolumen 11, 12 stattfindet. Typische Einspritzvorgänge bei der Kraftstoffeinspritzung im Kraftfahrzeug dauern jedoch nur wenige Millisekunden.

Damit sind die beiden wünschenswerten Eigenschaften "hydraulisch mit Spielausgleich" und "leckagefrei metallisch abgedichtet" in einer Anordnung vereinigt. Die Trennung der Funktionen erfolgt über die verschiedenen Zeitkonstanten. Dabei kann die Zeitkonstante des Spielausgleichs über die Dimensionierung des Spaltmaßes am Ringspalt 5 und der Viskosität des Hydraulikfluids sogar noch eingestellt werden. Bewegt werden lediglich Metallbälge. Diese benötigen keine besonderen Führungen und sind auch nicht besonders verschleißanfällig.

Das Ausführungsbeispiel mit reduziertem Hydraulikvolumen entsprechend Figur 3 zeigt die Umgebung eins möglichen praktischen Problems, was in den vorhergehenden Figuren auftreten kann. Bei relativ großem Volumen des Hydraulikfluids kann zum einen der Bedarf an Ausgleichsvolumen bei Temperaturänderungen direkt proportional zur eingefüllten Menge an Hydraulikfluid sein. Zum anderen nimmt die hydraulische Steifigkeit einer Flüssigkeitssäule mit der Höhe ab. Ein verlustarmer Hubübertrager soll jedoch möglichst steife Charakteristik aufweisen. Beide Probleme lassen sich verringern, wenn der Raum innerhalb der Metallbälge teilweise von einem oder mehreren Verdrängerkörpern ausgefüllt wird. Die Form der Verdränger ist frei wählbar, solange die notwendige Balgbewegung für Spielausgleich entsprechend den Figuren 1A und 1B und für die Einspritzung entsprechend den Figuren 2A und 2B nicht behindert wird. Figur 3 zeigt ein Ausführungsbeispiel mit zwei Verdrängerkörpern 17, wobei beide Verdränger einfach herzustellende Drehteile sind und lediglich Vergrößerungen von Bauteilen, die ohnehin benötigt werden.

## Patentansprüche

1. Hydraulischer Hubübersetzer umfassend:
- einen Festkörperaktor (4) zur Erzeugung von Hub, der an einem rückwärtigen Ende (61) an einem ersten Festlager (7) abgestützt ist,
- ein Hydrauliksystem (18) zur Darstellung eines hydraulischen Lagers für den Festkörperaktor zur Übertragung von Hub des Festkörperaktors, insbesondere auf ein Steuerelement wie eine Düsennadel eines Ventils, und zur Darstellung eines Spielausgleichs,
- wobei das Hydrauliksystem (18) ein erstes Hydraulikvolumen (11) aufweist, das nach außen hermetisch durch einen ersten Metallbalg (1) abgedichtet ist, der fest und hermetisch dicht mit einer Endplatte (8) am vorderen Ende (62) des Festkörperaktors (4) und mit einem zweiten Festlager (71) verbunden ist,
- wobei das Hydrauliksystem (18) ein zweites Hydraulikvolumen (12) aufweist, das nach außen hermetisch durch einen zweiten Metallbalg (2) abgedichtet ist, der fest und hermetisch dicht mit dem zweiten Festlager (71) und mit einer radialen Fläche eines als Hohlzylinder (10) ausgebildeten beweglichen Kolbens (9) verbunden ist, wobei der Kolben (9) das zweite Hydraulikvolumen (12) nach innen begrenzt,
- und wobei das Hydrauliksystem (18) ein drittes Hydraulikvolumen (13) aufweist, das nach außen hermetisch durch einen dritten Metallbalg (3) abgedichtet ist, der fest und hermetisch dicht mit der radialen Fläche des beweglichen Kolbens (9) und mit einer Endplatte (81) verbunden ist,
- wobei sich der als Hohlzylinder (10) ausgebildete Kolben (9) unter Bildung eines Ringspaltes (5) durch eine Öffnung (19) im zweiten Festlager (71) hindurch bis zum ersten Hydraulikvolumen (11) erstreckt,
- wobei das erste Hydraulikvolumen (11) mit dem zweiten Hydraulikvolumen (12) über den Ringspalt (5) in Verbindung steht,
- wobei das erste Hydraulikvolumen (11) mit dem dritten Hydraulikvolumen (13) über den als Hohlzylinder (10) ausgebildeten Kolben (9) in Verbindung steht,
- wobei die Hydraulikvolumen (11, 12, 13) mit Hydraulikfluid gefüllt sind,
- wobei über ein Verhältnis druckwirksamer Flächen des ersten Hydraulikvolumens (11) und des dritten Hydraulikvolumens (13) eine Hubübersetzung vorgegeben ist,
- wobei an der mit dem dritten Metallbalg (3) verbundenen Endplatte (81) ein übertragener Hub des Festkörperaktors (4) abgreifbar ist.

2. Hubübersetzer nach Anspruch 1, **dadurch gekennzeichnet, dass** Verbindungen zwischen Metallbälgen zu benachbarten Bauelementen durch Schweißverbindungen dargestellt sind.

3. Hubübersetzer nach einem der vorstehenden Ansprüche, **dadurch gekennzeichnet, dass** die Metallbälge konzentrisch zur Festkörperaktorachse angeordnet sind.

4. Hubübersetzer nach einem der vorstehenden Ansprüche, **dadurch gekennzeichnet, dass** ein in den Hydraulikvolumen (11, 12, 13) vorhandener Druck durch eine Feder, die auf den Kolben (9) wirkt, auf einen vorgegebenen Wert einstellbar ist.

5. Hubübersetzer nach einem der vorhergehenden Ansprüche, **dadurch gekennzeichnet, dass** mindestens ein Verdränger (17) in mindestens einem der Hydraulikvolumen (11, 12, 13) vorhanden ist.

6. Hubübersetzer nach einem der vorhergehenden Ansprüche, **dadurch gekennzeichnet, dass** der Hubübersetzer als ein Modul realisierbar ist.

7. Injektor zur Dosierung von Fluiden umfassend einen Hubübersetzer gemäß einem der vorhergehenden Ansprüche.

## Claims

1. Hydraulic stroke translator comprising:
- a solid-state actuator (4) for generating a stroke, which solid-state actuator (4) is supported at its rear end (61) on a first fixed bearing (7),
- a hydraulic system (18) for constituting a hydraulic bearing for the solid-state actuator for transmitting a stroke of the solid-state actuator, particularly to a control element such as a jet needle of a valve, and for constituting compensation for play,
- the hydraulic system (18) comprising a first hydraulic volume (11) which is hermetically sealed to the outside by a first metal bellows (1), which metal bellows (1) is connected in a fixed and hermetically sealed manner to an end plate (8) at the front end (62) of the solid-state actuator (4) and to a second fixed bearing (71),
- the hydraulic system (18) comprising a second hydraulic volume (12) which is hermetically sealed to the outside by a second metal bellows (2), which metal bellows (2) is connected in a fixed and hermetically sealed manner to the second fixed bearing (71) and to a radial surface of a movable piston (9) configured as a hollow cylinder (10), wherein the piston (9) defines the second hydraulic volume (12) internally,
- and the hydraulic system (18) comprising a third hydraulic volume (13) which is hermetically sealed to the outside by a third metal bellows (3), which metal bellows (3) is connected in a fixed and hermetically sealed manner to the radial surface of the movable piston (9) and to an end plate (81),
- the piston (9) configured as a hollow cylinder (10) extending through an opening (19) in the second fixed bearing (71) as far as the first hydraulic volume (11), forming an annular gap (5),
- the first hydraulic volume (11) and the second hydraulic volume (12) being connected together via the annular gap (5),
- the first hydraulic volume (11) and the third hydraulic volume (13) being connected together via the piston (9) configured as a hollow cylinder (10),
- the hydraulic volumes (11, 12, 13) being filled with hydraulic fluid,
- a stroke translation being predetermined via a ratio of the pressure-effective surfaces of the first hydraulic volume (11) and of the third hydraulic volume (13),
- a transmitted stroke of the solid-state actuator (4) being able to pick up on the end plate (81) connected to the third metal bellows (3).

2. Stroke translator according to claim 1, wherein connections between the metal bellows to adjacent components are constituted by welded connections.

3. Stroke translator according to one of the preceding claims, wherein the metal bellows are arranged concentrically to the solid-state actuator axis.

4. Stroke translator according to one of the preceding claims, wherein a pressure prevailing in the hydraulic volumes (11, 12, 13) is able to be set to a predetermined value by a spring which acts on the piston (9).

5. Stroke translator according to one of the preceding claims, wherein at least one displacement element (17) is present in at least one of the hydraulic volumes (11, 12, 13).

6. Stroke translator according to one of the preceding claims, wherein the stroke translator may be produced as a module.

7. Injector for metering fluids comprising a stroke translator according to one of the preceding claims.

## Revendications

1. Dispositif d'amplification de course hydraulique comprenant :
- un actionneur à carcasse fixe (4) pour la génération d'une course, qui est en appui au niveau d'une extrémité arrière (61) sur un premier palier fixe (7),
- un système hydraulique (18) pour la représentation d'un palier hydraulique pour l'actionneur à carcasse fixe en vue de la transmission de course de l'actionneur à carcasse fixe, en particulier à un élément de commande comme un pointeau d'une soupape, et pour la représentation d'une compensation de jeu,
- dans lequel le système hydraulique (18) présente un premier volume hydraulique (11), qui est cloisonné hermétiquement vers l'extérieur par le biais d'un premier soufflet métallique (1), qui est relié fixement et hermétiquement à une plaque d'extrémité (8) au niveau de l'extrémité avant (62) de l'actionneur à carcasse fixe (4) et à un deuxième palier fixe (71),
- dans lequel le système hydraulique (18) présente un deuxième volume hydraulique (12), qui est cloisonné hermétiquement vers l'extérieur par le biais d'un deuxième soufflet métallique (2), qui est relié fixement et hermétiquement au deuxième palier fixe (71) et à une surface radiale d'un piston mobile (9) configuré en tant que cylindre creux (10), le piston (9) délimitant vers l'intérieur le deuxième volume hydraulique (12),
- et dans lequel le système hydraulique (18) présente un troisième volume hydraulique (13), qui est cloisonné hermétiquement vers l'extérieur par le biais d'un troisième soufflet métallique (3), qui est relié fixement et hermétiquement à la surface radiale du piston mobile (9) et à une plaque d'extrémité (81),
- dans lequel le piston (9) configuré en tant que cylindre creux (10) s'étend en formant un espace annulaire (5) à travers une ouverture (19) dans le deuxième palier fixe (71) jusqu'au premier volume hydraulique (11),
- dans lequel le premier volume hydraulique (11) est en liaison avec le deuxième volume hydraulique (12) via l'espace annulaire (5),
- dans lequel le premier volume hydraulique (11) est en liaison avec le troisième volume hydraulique (13) via le piston (9) configuré en tant que cylindre creux (10),
- dans lequel les volumes hydrauliques (11, 12, 13) sont remplis de fluide hydraulique,
- dans lequel via un rapport des surfaces actives en pression du premier volume hydraulique (11) et du troisième volume hydraulique (13) une amplification de course est prédéfinie,
- dans lequel au niveau de la plaque d'extrémité (81) reliée au troisième soufflet métallique (3) une course transmise de l'actionneur à carcasse fixe (4) peut être déterminée.

2. Dispositif d'amplification de course selon la revendication 1, **caractérisé en ce que** des liaisons entre les soufflets métalliques et des composants adjacents sont représentées par des joints soudés.

3. Dispositif d'amplification de course selon l'une des revendications précédentes, **caractérisé en ce que** les soufflets métalliques sont disposés de manière concentrique par rapport à l'axe de l'actionneur à carcasse fixe.

4. Dispositif d'amplification de course selon l'une des revendications précédentes, **caractérisé en ce qu'**une pression régnant dans les volumes hydrauliques (11, 12, 13) est réglable sur une valeur prédéfinie par le biais d'un ressort qui agit sur le piston (9).

5. Dispositif d'amplification de course selon l'une des revendications précédentes, **caractérisé en ce qu'**au moins un piston déplaceur (17) est présent dans au moins un des volumes hydrauliques (11, 12, 13).

6. Dispositif d'amplification de course selon l'une des revendications précédentes, **caractérisé en ce que** le dispositif d'amplification de course est réalisable en tant que module.

7. Injecteur pour le dosage de fluides comprenant un dispositif d'amplification de course selon l'une des revendications précédentes.
